# EUROPÄISCHE PATENTSCHRIFT

(11) **EP 0 872 364 B1**
(45) Veröffentlichungstag und Bekanntmachung des Hinweises auf die Patenterteilung: **13.03.2002**
(21) Anmeldenummer: 98106023.9
(22) Anmeldetag: 02.04.1998
(51) Int. Cl.: B60D 1/06, B60D 1/64

(54) **Anhängekupplung für Kraftfahrzeuge**
Trailer coupling for motor vehicles
Attelage de remorque pour véhicules automobiles

(30) Priorität: 14.04.1997 DE 19715469
(43) Veröffentlichungstag der Anmeldung: 21.10.1998
(62) Teilanmeldung aus: 98109679.5
(73) Patentinhaber: ORIS FAHRZEUGTEILE HANS RIEHLE GmbH, 71696 Möglingen (DE)
(72) Erfinder: Riehle, Hans, 71638 Ludwigsburg (DE)
(74) Vertreter: Hoeger, Stellrecht & Partner

(56) Entgegenhaltungen:
- EP-A- 0 544 630
- DE-A- 4 301 506
- GB-A- 835 653
- GB-A- 2 042 316
- US-A- 2 658 185
- US-A- 3 473 826

## Beschreibung

Die Erfindung betrifft eine Anhängekupplung für Kraftfahrzeuge, insbesondere Personenkraftfahrzeuge, umfassend einen eine Kupplungskugel tragenden Kugelhals, eine an dem Kraftfahrzeug montierbare Halterung für den Kugelhals, eine an einem zwischen der Halterung und der Kupplungskugel liegenden Abschnitt des Kugelhalses angeordnete Kontakteinheit, eine in dem die Kontakteinheit tragenden Abschnitt des Kugelhalses vorgesehene Ausnehmung versehen ist, welche von einer seitlich des Kugelhalses liegenden ersten Öffnung in den Abschnitt eindringt.

Eine derartige Anhängekupplung ist aus der US 3,473,826 bekannt.

Bei dieser Anhängekupplung ist die Kontakteinheit seitlich auf ein hohles Rohr des Kugelhalses aufgesetzt und die Kabel sind durch die Ausnehmung in den Kugelhals geführt.

Aus der DE-A-43 015 06 ist eine herkömmliche auf einem Steckerblech zu montierende Kontakteinheit bekannt.

Der Erfindung liegt daher die Aufgabe zugrunde, eine Lösung zu finden, bei welcher die Kontakteinheit raumsparend am Kugelhals angeordnet ist.

Diese Aufgabe wird bei einer Anhängekupplung der eingangs beschriebenen Art erfindungsgemäß dadurch gelöst, daß sich die Ausnehmung von der ersten Öffnung durch den die Kontakteinheit tragenden Abschnitt des Kugelhalses hindurch bis zu einer zweiten Öffnung erstreckt, daß die Kontakteinheit ein Isoliergehäuse mit einem Deckel und einen in dem Isoliergehäuse angeordneten sowie elektrische Kontakte tragenden Kontakteinsatz aufweist, daß das Isoliergehäuse sich zumindest mit einem Teilbereich in die Ausnehmung hineinerstreckt, und daß das Isoliergehäuse mit seinem den Deckel tragenden Teilbereich über die Öffnung der Ausnehmung seitlich übersteht.

Der Vorteil der erfindungsgemäßen Lösung ist darin zu sehen, daß mit dieser einerseits die Kontakteinheit an einem wesentlich besser zugänglichen Ort angeordnet ist, so daß eine Herstellung einer elektrischen Verbindung zwischen Kraftfahrzeug und Anhänger viel leichter und besser einsehbar hergestellt werden kann. Darüber hinaus hat die erfindungsgemäße Lösung noch den großen Vorteil, daß sie aufgrund der Tatsache, daß die Kontakteinheit zumindest mit einem Teilbereich des Isoliergehäuses in einer Ausnehmung des Kugelhalses angeordnet ist, einerseits wenig auffällig angeordnet und andererseits gegen mechanische Beschädigungen geschützt ist, da der Kugelhals selbst aufgrund der an diesem zwangsläufig wirkenden Kräfte aus sehr steifem Material hergestellt ist und damit gleichzeitig einen optimalen Schutz des Isoliergehäuses der Kontakteinheit gewährleistet.

Diese Lösung ermöglicht es auch, das Isoliergehäuse der Kontakteinheit im Gegensatz zu den bislang bekannten Kontakteinheiten einfacher und weniger robust und somit räumlich kleiner auszuführen, da im Gegensatz zu den bislang bekannten Lösungen das Isoliergehäuse der Kontakteinheit nicht gleichzeitig ein mechanisches Schutzgehäuse darzustellen braucht, sondern lediglich die Aufgabe hat, eine elektrische Isolation zwischen einem inneren der Kontakteinheit, in welchem der Kontaktträger angeordnet ist und dem Kugelhals zu bewirken.

Mit der in den Kugelhals integrierten Ausnehmung zur Aufnahme des Isoliergehäuses der Kontakteinheit wird somit durch den Kugelhals selbst ein optimaler Schutz der Kontakteinheit gegen mechanische Beschädigungen gewährleistet, so daß die Kontakteinheit ihrerseits selbst wieder kleiner und somit raumsparender ausgebaut werden kann, wodurch wiederum die Integration derselben in den Kugelhals und somit deren optisch unauffällige Anordnung erleichtert wird.

Dadurch, daß das Isoliergehäuse mit seinem den Deckel tragenden Teilbereich über die Öffnung der Ausnehmung seitlich übersteht, hat die erfindungsgemäße Lösung ferner noch den Vorteil, daß damit auch die Möglichkeit gegeben ist, den Deckel größer als den in die Ausnehmung hineinragenden Abschnitt des Isoliergehäuses auszubilden, so daß der Deckel in einfacher Weise das Isoliergehäuse im Bereich einer Einstecköffnung dichtend ausgebildet werden kann.

Außerdem ist dadurch, daß die Ausnehmung eine weitere Öffnung aufweist, über diese zweite Zugänglichkeit der Ausnehmung beispielsweise eine elektrische Zuleitung einfach realisieren oder auch die Fixierung des Isoliergehäuses in der Ausnehmung.

Eine besonders optimale Anordnung ist dann gegeben, wenn das Isoliergehäuse sich mit mindestens der Hälfte seiner axialen Länge in die Ausnehmung hineinerstreckt, so daß das Isoliergehäuse nur maximal mit der Hälfte seiner axialen Länge über den Abschnitt des Kugelhalses übersteht.

Besonders günstig ist es, wenn die beiden Öffnungen der Ausnehmung auf gegenüberliegenden Seiten des Kugelhalses angeordnet sind, so daß die Ausnehmung als den Kugelhals durchdringende Ausnehmung ausgebildet ist. Beispielsweise ist es in diesem Fall möglich, das Isoliergehäuse so anzuordnen, daß es beiderseits über die Öffnungen der Ausnehmung übersteht.

Diese Lösung läßt sich besonders günstig realisieren, wenn die sich zwischen den Öffnungen erstreckende Ausnehmung den Kugelhals mit im wesentlichen konstantem Querschnitt durchdringt, so daß auch die sich in der Ausnehmung erstreckende Form des Isoliergehäuses besonders einfach ausgebildet sein kann.

Alternativ dazu ist es denkbar, daß die eine Öffnung eine größere Querschnittsfläche aufweist als die andere Öffnung, eine Lösung die einerseits in einfacher Weise die Möglichkeit schafft, ein Zuleitungskabel einfach zuzuführen, andererseits jedoch einen noch besseren Schutz für die Kontakteinheit bietet.

Besonders günstig ist es bei dieser Lösung, wenn die Ausnehmung sich mit dem Querschnitt der größeren Öffnung in den Abschnitt des Kugelhalses hineinerstreckt und sich dann auf den Querschnitt der kleineren Öffnung verengt. Hierdurch ist bei einem möglichst großen Raum für die Kontakteinheit ein optimaler Schutz derselben gewährleistet.

Um die für die Realisierung elektrischer Kontakte und deren Anschlüsse an ein Zuleitungskabel notwendige Baulänge zu erreichen, ist vorzugsweise vorgesehen, daß das Isoliergehäuse über beide Öffnungen in Teilbereichen übersteht und somit hinsichtlich des Bauraums eine möglichst unauffällige Anordnung der Kontakteinheit möglich ist.

Eine besonders günstige Lösung sieht vor, daß über eine der Öffnungen ein elektrisches Zuleitungskabel zu dem Isoliergehäuse geführt ist, während im Bereich der anderen Öffnung der Deckel angeordnet ist.

Eine besonders einfache und insbesondere raumsparende Lösung sieht vor, daß das Isoliergehäuse in seinem sich in die Ausnehmung hineinerstreckenden Teilbereich eine Gehäusehülse mit zylindrischer Außenkontur aufweist.

Eine möglichst hinsichtlich ihres Durchmessers kleine Gehäusehülse ist dann erreichbar, wenn ein Außendurchmesser derselben ungefähr einem Durchmesser einer Einstecköffnung entspricht, das heißt, daß die Gehäusehülse sich in radialer Richtung lediglich um eine für deren Stabilität erforderliche Wandstärke über den Durchmesser der Einstecköffnung hinauserstreckt und somit den minimalen erforderlichen Außendurchmesser erreicht, wenn man davon ausgeht, daß die Größe der Einstecköffnung aufgrund eines beispielsweise einzusteckenden Normsteckers fest vorgegeben ist.

Um den Deckel des Gehäuses möglichst vorteilhaft anzuordnen ist vorgesehen, daß die Gehäusehülse in dem über die Öffnung seitlich überstehenden Teilbereich ein auf deren Außenseite angeordnetes Schwenklager für den Deckel trägt. Damit stellt das Schwenklager keine Erweiterung der radialen Dimension der Gehäusehülse in dem Bereich dar, in dem diese in die Ausnehmung eingesteckt wird, sondern lediglich in dem überstehenden Bereich und schafft somit die Möglichkeit, die Ausnehmung im Kugelhals möglichst klein auszuführen.

Hinsichtlich der Verankerung der Kontakteinheit an dem Kugelhals wurden bislang keine näheren Angaben gemacht. Beispielsweise wäre es denkbar, die Kontakteinheit kraftschlüssig in dem Kugelhals zu verankern. Besonders vorteilhaft ist jedoch eine Lösung bei welcher das Isoliergehäuse formschlüssig an dem Kugelhals verankert ist.

Die Art der formschlüssigen Verankerung läßt sich in unterschiedlichster Art und Weise ausführen. So sieht eine günstige Lösung vor, daß das Isoliergehäuse in Richtung quer zu seiner Längsachse durch die Ausnehmung und in Richtung seiner Längsachse durch an dem Kugelhals anliegende Formschlußelemente formschlüssig verankert ist. Derartige an den Kugelhals anliegende Formschlußelemente können beispielsweise an einer Außenseite des Kugelhalses anliegende Formschlußelemente sein. Es ist aber auch beispielsweise denkbar, daß diese Formschlußelemente beiderseits eines Ringflansches anliegen, welcher beispielsweise dazu dient, die Ausnehmung zu begrenzen.

Derartige Formschlußelemente können einerseits fest auf dem Isoliergehäuse angeordnete Anschlagkörper sein und andererseits auf das Isoliergehäuse entweder durch Rastelemente gesicherte aufsteckbare oder aufschraubbare Formschlußelemente, wie beispielsweise Ringe oder ganze Teile des Isoliergehäuses, beispielsweise Bodenteile desselben.

Eine andere Lösung sieht vor, daß das Isoliergehäuse in Richtung quer zu seiner Längsachse durch die Ausnehmung und in Richtung seiner Längsachse durch Rastelemente formschlüssig in dem Kugelhals verankert ist.

Die Rastelemente können dabei an beliebiger Stelle angeordnet sein. Vorzugsweise sieht ein vorteilhaftes Ausführungsbeispiel vor, daß die Rastelemente in eine Wand der Ausnehmung eingreifen, wobei die Wand entsprechende Rastaufnehmungen aufweist.

Ferner ist vorzugsweise vorgesehen, daß das Isoliergehäuse drehfest an dem Kugelhals, beispielsweise ebenfalls durch die Formschlußelemente, fixiert ist.

Hinsichtlich der mechanischen Struktur und insbesondere der Ausbildung des Kugelhalses im Bereich des die Ausnehmung als integralen Bestandteil aufweisenden Abschnittes wurden bislang keine näheren Ausführungen gemacht. So wäre es beispielsweise denkbar, den Kugelhals so auszubilden, daß er die Ausnehmung beispielsweise soweit umgreift, daß eine ausreichende mechanische Fixierung des Isoliergehäuses in dieser möglich ist. Dies würde beispielsweise erforderlich machen, das Isoliergehäuse über mehr als die Hälfte seiner Form zu übergreifen oder auch die Ausnehmung so zu gestalten, daß sie zwar einen Teil des Isoliergehäuses aufweist aber beispielsweise noch zusätzlich in an diesem Isoliergehäuse vorgesehene Formschlußelemente eingreift, so daß ebenfalls ein vollständiges Umschließen des Isoliergehäuses nicht notwendig wäre.

Eine besonders günstige Lösung sieht jedoch vor, daß der Kugelhals in dem die Kontakteinheit tragenden Abschnitt eine die Ausnehmung ringförmig umschließende Form aufweist. Eine derartige Ausbildung des Kugelhalses hat den großen Vorteil, daß dadurch eine stabile und allseits geschlossene Struktur zur Verfügung steht, welche ihrerseits selbst ein Gehäuse für die Aufnahme des Isoliergehäuses bildet.

Um nun den Kugelhals so zu schaffen, daß in einfacher Weise in diesem die Ausnehmung angeordnet werden kann, ist vorzugsweise vorgesehen, daß eine untere Konturlinie des Kugelhalses im Bereich des die Kontakteinheit tragenden Abschnittes und diesem benachbarter Abschnitte kontinuierlich verläuft, das heißt vorzugsweise näherungsweise einer geradlinigen Konturlinie nahekommt.

Mit dieser Lösung wurde der Tatsache Rechnung getragen, daß eine Anhängekupplung ebenfalls eine Begrenzung der Bodenfreiheit eines Kraftfahrzeugs darstellen kann und somit seitens der Anhängekupplung die Bodenfreiheit des Kraftfahrzeugs möglichst wenig beeinträchtigt werden soll, so daß vorgesehen ist, die untere Konturlinie gegenüber herkömmlichen Anhängekupplungen möglichst unverändert zu belassen.

Ferner sieht eine vorteilhafte Form vor, daß eine obere Konturlinie des Kugelhalses im Bereich des die Kontakteinheit tragenden Abschnittes eine konvexe Form aufweist. Eine derartige Ausbildung schafft Raum für eine ausreichend große Ausnehmung und stellt andererseits sicher, daß die Ausnehmung vollständig vom Kugelhals umschlossen werden kann.

Besonders günstig ist es dabei, wenn die obere Konturlinie des Kugelhalses unterhalb einer in Höhe einer Unterkante des Kugelkopfes verlaufenden Horizontalen verläuft und somit ausgeschlossen werden kann, daß möglicherweise Kollisionen zwischen einer die Kupplungskugel übergreifenden Anhängekupplung und den die Kontakteinheit tragenden Abschnitt des Kugelhalses entstehen.

Mit einer derartigen Ausbildung des Kugelhalses im Bereich des die Kontakteinheit tragenden Abschnittes ist ein optimaler Schutz des Isoliergehäuses derselben gegeben.

Nach wie vor stellt jedoch der Deckel der Kontakteinheit einen kritischen Punkt dar, da der Deckel möglichst geschützt sein sollte, insbesondere gegen äußere mechanische Einwirkungen.

Besonders günstig ist es daher, wenn das Isoliergehäuse der Kontakteinheit so in der Ausnehmung angeordnet ist, daß sich der Deckel in einer zur Kugelhalskrümmungsebene parallelen Ebene oberhalb der unteren Konturlinie des Kugelhalses erstreckt, so daß der Kugelhals selbst mit seiner unteren Konturlinie einen Schutz auch für den Deckel darstellt, insbesondere in allen Fällen, in denen der Kugelhals dritte Gegenstände, beispielsweise auch den Boden, berührt, da in diesem Fall der Kugelhals zuerst mit der Konturlinie berührt und somit den Deckel gegen eine Berührung mit einem derartigen Drittgegenstand oder dem Boden schützt.

Ferner sieht eine vorteilhafte Lösung vor, daß sich der Deckel in einer zur Kugelhalskrümmungsebene parallelen Ebene unterhalb der oberen Konturlinie erstreckt und somit auch der Kugelhals selbst mit seiner oberen Konturlinie einen Schutz, beispielsweise gegen herabfallende Gegenstände, bietet.

Hinsichtlich der Führung der Zuleitungskabel zu der Kontakteinheit wurden im Zusammenhang mit der bisherigen Erläuterung der einzelnen Ausführungsbeispiele keine näheren Angaben gemacht. Beispielsweise kann das Zuleitungskabel frei hängend vom Kraftfahrzeug zu der Kontakteinheit geführt werden. Eine besonders sichere Führung des Zuleitungskabels, insbesondere auch, um dieses gegen Beschädigungen zu schützen sieht vor, daß ein zur Kontakteinheit für das Zuleitungskabel längs des Kugelhalses verläuft und dabei ebenfalls durch die obere Konturlinie und die untere Konturlinie des Kugelhalses geschützt ist.

Eine noch besserer Schutz des Zuleitungskabels ist dann gegeben, wenn dieses in einer längs des Kugelhalses laufenden Vertiefung verläuft, da in diesem Fall auch durch die Vertiefung ein Schutz gegen seitliche Einwirkungen gegen das Zuleitungskabel gegeben ist.

Bei all den bislang beschriebenen Ausführungsbeispielen kann der Kugelhals prinzipiell als starr am Kraftfahrzeug befestigter Kugelhals ausgebildet sein. Auch bei dieser Lösung bildet die erfindungsgemäße Lösung erhebliche Vorteile hinsichtlich der Zugänglichkeit der Kontakteinheit.

Noch drastischer wirken sich die Vorteile der erfindungsgemäßen Lösung dann aus, wenn der Kugelhals von einer aktiven Stellung in eine inaktive Stellung bringbar ist und somit selbst nicht stets in der aktiven Stellung verbleibt.

Dabei ist in der inaktiven Stellung mit der Bewegung des Kugelhalses in diese zwangsläufig auch eine Bewegung der Kontakteinheit in die inaktive Stellung gewährleistet, so daß in einfacher Weise die Kontakteinheit aus dem Sichtfeld des Benutzers des Kraftfahrzeugs gebracht und zusätzlich geschützt ist, wenn die Anhängekupplung in ihrer inaktiven Stellung steht. Beispielsweise wäre es möglich, dies auch bei einer abnehmbaren Kupplung zu realisieren.

Besonders vorteilhaft ist jedoch die erfindungsgemäße Lösung dann, wenn der Kugelhals von seiner aktiven in die inaktive Stellung verschwenkbar ist, so daß das Zuleitungskabel in diesem Fall lediglich der Schwenkbewegung des Kugelhalses folgen muß.

Weitere Merkmale und Vorteile der erfindungsgemäßen Lösung sind Gegenstand der nachfolgenden Beschreibung sowie der zeichnerischen Darstellung einiger Ausführungsbeispiele:

In der Zeichnung zeigen:
- Fig. 1: eine teilweise perspektivische Seitenansicht eines Kugelhalses einer erfindungsgemäßen Anhängekupplung ohne Kontakteinheit;
- Fig. 2: eine Draufsicht in Richtung des Pfeils A in Fig. 1;
- Fig. 3: eine vergrößerte Seitenansicht des Kugelhalses gemäß Fig. 1 mit eingesetzter Kontakteinheit;
- Fig. 4: einen Schnitt längs Linie 4-4 in Fig. 3;
- Fig. 5: eine Schnittdarstellung ähnlich Fig. 4 durch ein zweites Ausführungsbeispiel;
- Fig. 6: einen Schnitt ähnlich Fig. 4 durch ein drittes Ausführungsbeispiel;
- Fig. 7: einen Schnitt längs Linie 7-7 in Fig. 6;
- Fig. 8: einen Schnitt ähnlich Fig. 4 durch ein viertes Ausführungsbeispiel und
- Fig. 9: einen Schnitt ähnlich Fig. 4 durch ein fünftes Ausführungsbeispiel.

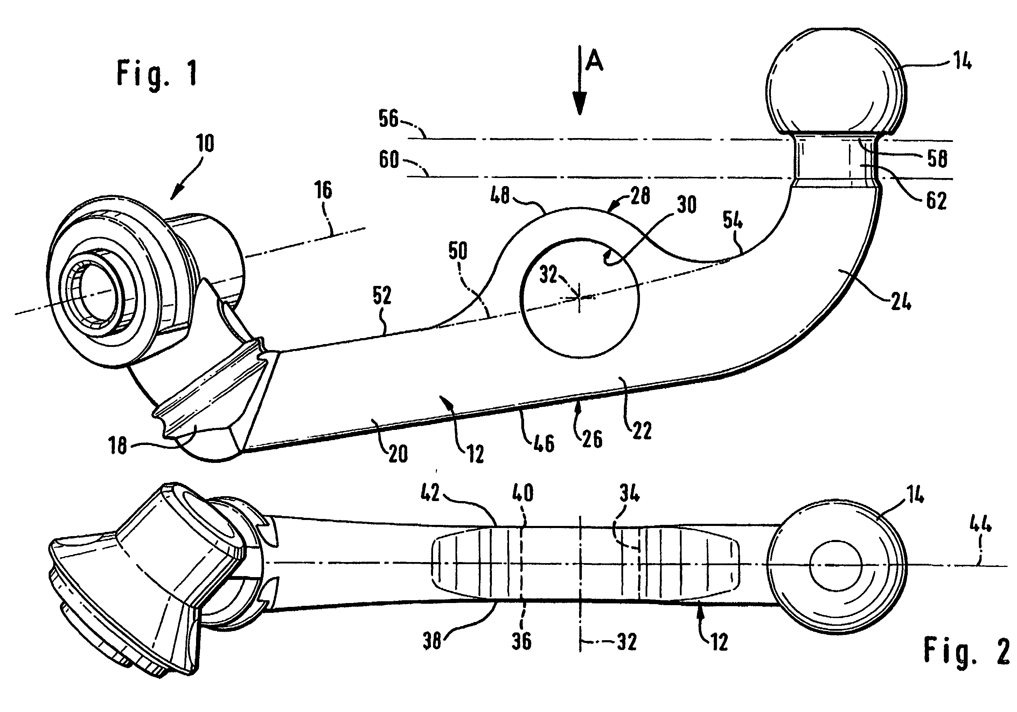

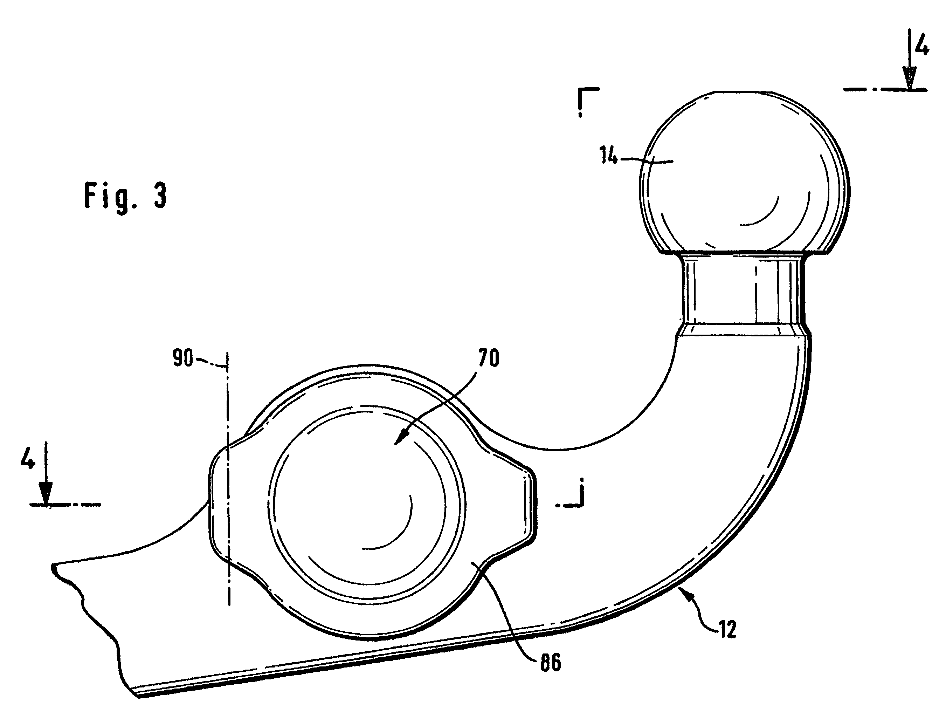

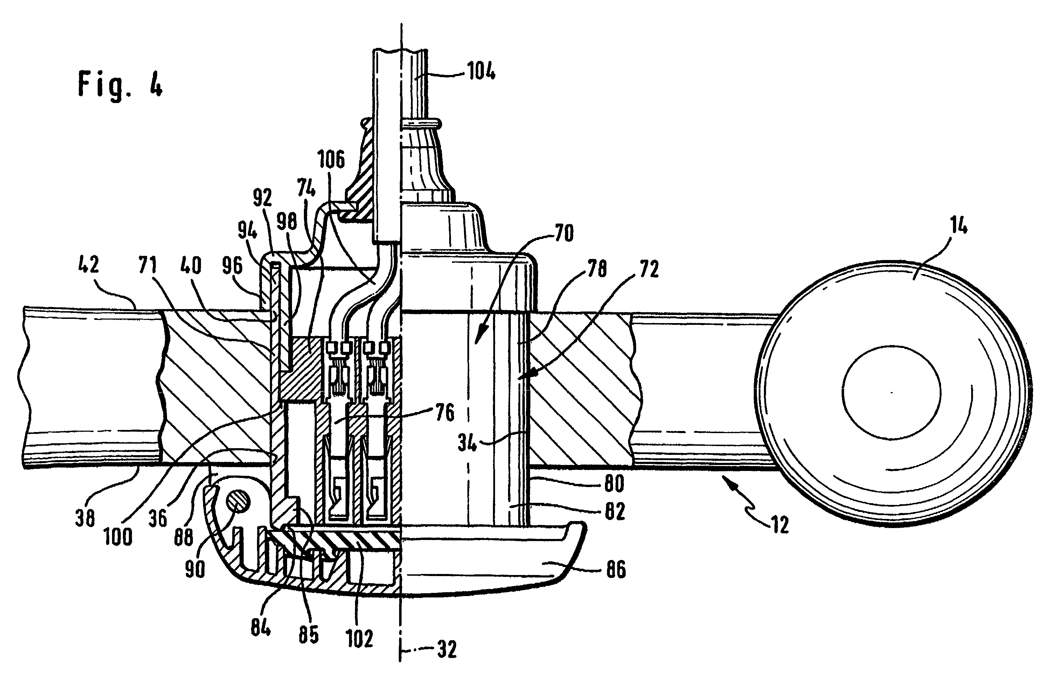

Ein erstes Ausführungsbeispiel einer erfindungsgemäßen Anhängekupplung, dargestellt in Fig. 1 bis 4, insbesondere für Personenkraftfahrzeuge, umfaßt eine als Ganzes mit 10 bezeichnete Halterung, an welcher ein Kugelhals 12, welche eine Kupplungskugel 14 trägt, beispielsweise um eine Achse 16 schwenkbar gelagert ist. Die Achse 16 verläuft dabei so, wie in der deutschen Patentanmeldung 196 12 962.1-21 beschrieben, so daß bezüglich der schwenkbaren Lagerung des Kugelhalses 12 an der Halterung 10 vollinhaltlich auf die Ausführungen zur vorstehend genannten deutschen Patentanmeldung Bezug genommen wird.

Alternativ dazu kann die Halterung 10 aber auch so ausgebildet sein, daß sie den Kugelhals 12 starr hält oder so, daß der Kugelhals 12 abnehmbar in der Halterung 10 verankert ist.

Eine Halterung, in welcher der Kugelhals 12 abnehmbar gehalten ist, ist beispielsweise in der deutschen Patentanmeldung 196 13 428.5-21 beschrieben, auf welche diesbezüglich vollinhaltlich Bezug genommen wird.

Der sich zwischen der Halterung 10 und der Kupplungskugel 14 erstreckende Kugelhals 12 weist im Anschluß an die Halterung 10 einen ersten abgekröpften Abschnitt 18 auf, dann einen im wesentlichen gerade gerichteten Abschnitt 20, an diesen anschließend einen weiteren Abschnitt 22, an welchen sich ein zweiter gekröpfter Abschnitt 24 anschließt, der letztendlich an seinem Ende die Kupplungskugel 14 trägt.

In dem Abschnitt 22 weist der Kugelhals 12 einen unteren Schenkel 26 und einen oberen Schenkel 28 auf, welche eine Ausnehmung 30 ringförmig umschließen, wobei die Ausnehmung 30 vorzugsweise eine zu einer Querachse 32 kreiszylindrische Wandfläche 34 aufweist, die sich ausgehend von einer ersten Öffnung 36, welche auf einer Seite 38 des Kugelhalses liegt, durch den Abschnitt 22 hindurch erstreckt bis zu einer zweiten Öffnung 40, welche auf einer gegenüberliegenden Seite 42 des Kugelhalses liegt.

Dabei erstreckt sich die Querachse 32 quer, vorzugsweise senkrecht zu einer Krümmungsebene 44 des Kugelhalses und die Öffnungen 36 und 40 liegen ungefähr parallel zur Krümmungsebene 44, so daß die Seiten 38 und 42 Längsseiten des Kugelhalses 12 darstellen.

Ferner ist vorzugsweise der Schenkel 26 im Abschnitt 22 so ausgebildet, daß eine in der Krümmungsebene 44 liegende untere Kontur 46 des Kugelhalses 12 ausgehend von dem Abschnitt 20 über den Abschnitt 22 bis zum Beginn des Abschnitts 24 im wesentlichen längs einer Verbindungslinie zwischen der unteren Kontur des Abschnitts 20 und der unteren Kontur des Abschnitts 24 in unmittelbarem Anschluß an dem Abschnitt 22, vorzugsweise ungefähr als Gerade, verläuft, während eine obere in der Krümmungsebene 44 liegende Kontur 48 des Abschnitts 28, gebildet durch den Schenkel 28 desselben sich über eine Verbindungslinie 50 zwischen einer oberen Kontur 52 des Abschnitts 20 und einer oberen Kontur 54 des Abschnitts 24 in unmittelbarem Anschluß an den Abschnitt 22 erhebt. Die obere Kontur 48 liegt dabei vorzugsweise unterhalb einer Horizontalen 56, deren Höhe durch ein unteres Ende 58 der Kupplungskugel bestimmt ist, vorzugsweise sogar unterhalb einer Horizontalen 60 festgelegt durch eine endseitige Einschnürung 62 des Kugelhalses 12 in unmittelbarem Anschluß an die Kupplungskugel 14.

In die Ausnehmung 30 ist eine als Ganzes mit 70 bezeichnete Kontakteinheit eingesetzt, welche ein eine zylindrisch geformte Gehäusehülse 71 aufweisendes Isoliergehäuse 72 aufweist, in welchem ein Kontaktträger 74 fixiert ist, der seinerseits elektrische Kontakte 76, vorzugsweise Kontaktbuchsen, trägt.

Das Isoliergehäuse 72 erstreckt sich in seiner Längsrichtung koaxial zur Querachse 32 und liegt mit einem Teilbereich 78 einer Außenmantelfläche 80 seiner Gehäusehülse 71 an der zylindrischen Wandfläche 34 der Ausnehmung 30 an und wird durch diese parallel zur Querachse 30 ausgerichtet gehalten.

Das Isoliergehäuse 72 steht ferner mit seiner Gehäusehülse 71 über die Öffnung 36 mit einem Teilbereich 82 über und weist eine Einstecköffnung 84 für ein Kontaktelement, vorzugsweise einen Kontaktstecker auf, welche mit einem Deckel 86 verschließbar ist. Der Deckel 86 ist mittels eines Schwenklagers 88 an dem Isoliergehäuse 72 auf einer der Kupplungskugel 14 abgewandten Seite um eine Achse 90 schwenkbar gehalten, wobei die Achse 90 vorzugsweise ungefähr in vertikaler Richtung ausgerichtet ist. Das Schwenklager 88 steht dabei als Block über die Außenmantelfläche 80 der Gehäusehülse 71 im Teilbereich 82 über und ist vorzugsweise einstückig an das Isoliergehäuse 72 angeformt.

Das Schwenklager 88 liegt ferner an der Seite 38 des Kugelhalses 12 im Abschnitt 22 an und dient somit gleichzeitig als Fixierung des Isoliergehäuses 72 in einer ersten Richtung der Querachse 32 relativ zum Kugelhals 12.

Ferner ist das Isoliergehäuse 72 zusätzlich noch gegen eine Bewegung in einer entgegengesetzten zweiten Richtung parallel zur Querachse 32 relativ zum Kugelhals 12 dadurch fixiert, daß dieses auf seiner dem Deckel 86 gegenüberliegenden Seite mit einer Gehäusekappe 92 verschließbar ist, welche die Außenmantelfläche 80 des über die Öffnung 40 überstehenden Teilbereichs 94 der Gehäusehülse 71 mit einem hülsenähnlichen Ansatz 96 übergreift, welcher an der Seite 42 des Kugelhalses 12 anliegt. Durch den hülsenförmigen Ansatz 96 und das Schwenklager 88 ist somit das Isoliergehäuse 72 in Richtung der Querachse 32 unverschieblich relativ zum Abschnitt 22 des Kugelhalses 12 fixiert.

Vorzugsweise ist die Gehäusekappe 92 entweder auf das Isoliergehäuse 72 aufschraubbar oder aufsteckbar mit einer Klebeverbindung festlegbar oder mit diesem verrastbar.

Vorzugsweise weist die Gehäusekappe 92 noch einen in das Isoliergehäuse 72 eingreifenden Fortsatz 98 auf, welcher den Kontaktträger 74 gegen eine Bewegung in Richtung der Gehäusekappe 92 fixiert und dabei gleichzeitig vorzugsweise gegen eine Schulter 100 im Innern des Isoliergehäuses 72 anlegt.

Um dem Isoliergehäuse 72 einen möglichst kleinen Durchmesser zu verleihen, hat dieses eine radiale Erstreckung bezüglich der Querachse 32, welche ungefähr der Einstecköffnung 84 entspricht. Dabei hat die Einstecköffnung 84 einen Durchmesser, welcher einem Außendurchmesser eines Normsteckers entspricht und trägt einen Vorsprung 85, welcher mit einem Außengewindezug des Normsteckers zur Sicherung desselben in Eingriff bringbar ist. Ferner ist die von dem Deckel 86 überdeckte Einstecköffnung 84 noch dadurch gegen Schmutz und eindringendes Wasser verschließbar, daß der Deckel 86 an seiner Innenseite eine Dichtung 102 trägt, welche sich in radialer Richtung so weit erstreckt, daß sie an der Gehäusehülse 71 mit ihrem die Einstecköffnung umschließenden Rand anliegt.

Ein zur Kontakteinheit 70 führendes Zuleitungskabel 104 durchsetzt vorzugsweise die Gehäusekappe 92 und verläuft mit seinen einzelnen Adern 106 durch die Öffnung 40 zu den einzelnen elektrischen Kontakten 76 im Kontaktträger 74.

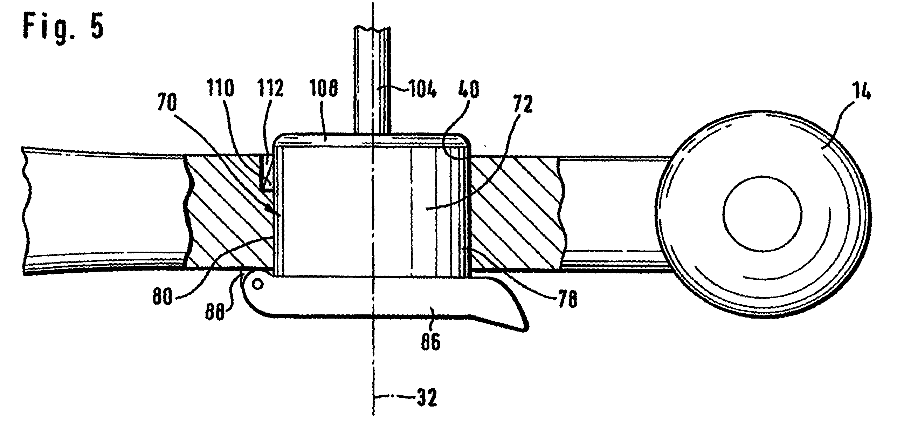

Bei einem zweiten Ausführungsbeispiel, dargestellt in Fig. 5, sind diejenigen Teile, die mit denen des Ausführungsbeispiels identisch sind, mit denselben Bezugszeichen versehen, so daß hinsichtlich der Beschreibung derselben vollinhaltlich auf die Ausführung zum ersten Ausführungsbeispiel Bezug genommen werden kann.

Im Gegensatz zum ersten Ausführungsbeispiel ist das Isoliergehäuse 72 der Kontakteinheit 70 auf seiner dem Deckel 86 gegenüberliegenden Seite mit einem Boden 108 verschlossen, welcher nicht radial über die Außenmantelfläche 80 der Gehäusehülse 71 des Isoliergehäuses 72 übersteht. Im Gegensatz dazu trägt die Außenmantelfläche 80 in ihrem in die Ausnehmung 30 eingreifenden Teilbereich 78 radial überstehende Rastnasen 110, welche mit entsprechend angeordneten Rastausnehmungen 112 in der Wandfläche 34 der Ausnehmung 30 in Eingriff bringbar sind und somit das Isoliergehäuse 72 gegen eine Bewegung in Richtung der Querachse 32 sichern, während die Sicherung des Isoliergehäuses 72 in die entgegengesetzte Richtung parallel zur Querachse 30 durch das Schwenklager 88 erfolgt. Ferner ist durch das Vorsehen der in die Rastausnehmungen 112 eingreifenden Rastelemente 110 gleichzeitig noch eine Verdrehsicherung des Isoliergehäuses 72 in der Ausnehmung 30 realisierbar.

Auch bei diesem Ausführungsbeispiel verläuft das Zuleitungskabel 104 durch den Boden 108 und somit durch die Öffnung 40 der Ausnehmung 30.

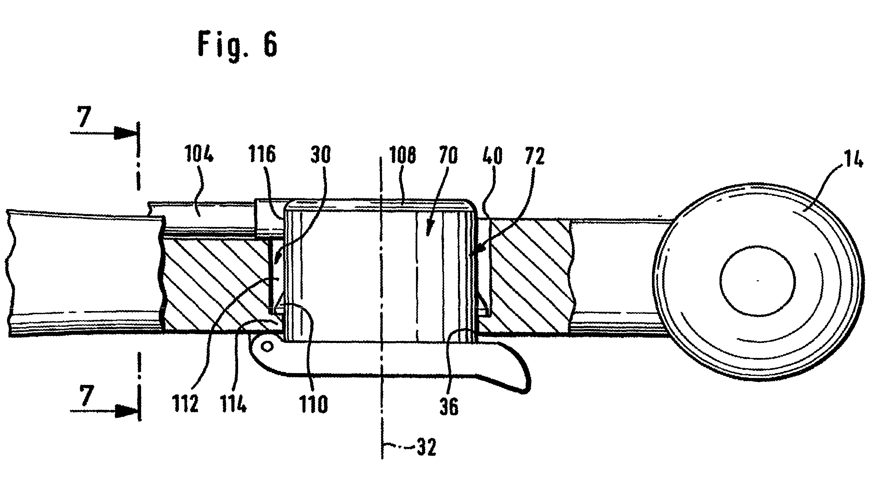

Bei einem dritten Ausführungsbeispiel der erfindungsgemäßen Anhängekupplung, dargestellt in Fig. 6, ist das Isoliergehäuse 72 der Kontakteinheit 70 in gleicher Weise wie beim ersten Ausführungsbeispiel in der Ausnehmung 30 verankert, allerdings erstrecken sich die Rastausnehmungen 112 der Ausnehmung 30 von der Öffnung 40 derselben ausgehend parallel zur Querachse 32 tief in die Ausnehmung 30 hinein, so daß zwischen der Öffnung 36 und dem Rastelement 110 ein dünnes Wandstück 114 als Gegenlager für das Rastelement 110 dient.

Ferner ist vorzugsweise das Zuleitungskabel 104 nicht durch den Boden 108 in das Isoliergehäuse 72 eingeführt, sondern über einen Teilbereich 116 des Isoliergehäuses 72, welcher sich unmittelbar an den Boden 108 anschließt, so daß in diesem Fall das Zuleitungskabel 104 im wesentlichen quer oder schräg zur Querachse 32 in das Isoliergehäuse 72 eintritt.

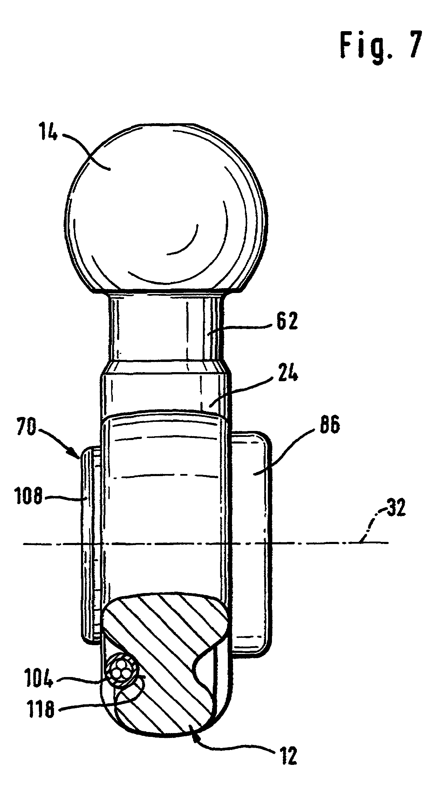

In diesem Fall läßt sich das Zuleitungskabel wie in Fig. 7 dargestellt, in einer Nut 118 des Kugelhalses 12, welches sich längs des Abschnitts 20 desselben erstreckt, unmittelbar in das Isoliergehäuse 72 einführen.

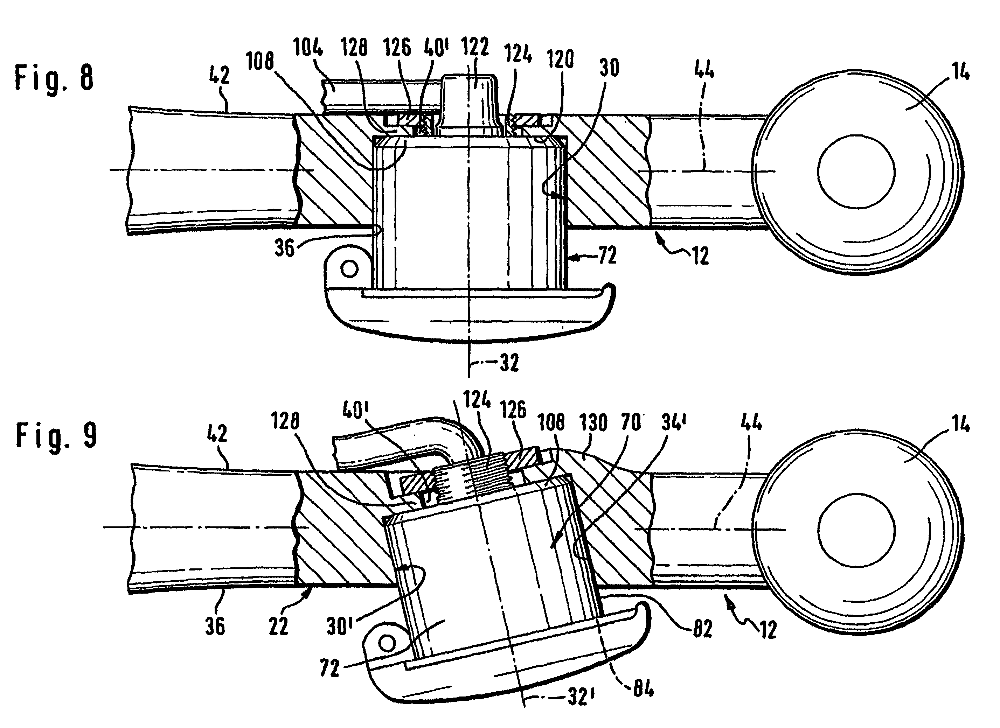

Bei einem vierten Ausführungsbeispiel der erfindungsgemäßen Anhängekupplung, dargestellt in Fig. 8, ist die Ausnehmung 30 stufenförmig ausgebildet, d.h. diese erstreckt sich ausgehend von der Öffnung 36 mit einem im wesentlichen zylindrischen Querschnitt in den Abschnitt 22 des Kugelhalses 12 hinein, bis zu einer die Öffnung 40' umgebenden Ringflanschfläche 120, so daß die Öffnung 40' einen kleineren Querschnitt aufweist als die Öffnung 36.

Die Zuführung des Zuleitungskabels 104 erfolgt jedoch nach wie vor über einen die Öffnung 40' durchgreifenden Stutzen 122 des Isoliergehäuses 72, wobei sich der Stutzen 122 über den Boden 108 des Isoliergehäuses 72 hinaus erstreckt.

Zur Fixierung ist der Boden 108 des Isoliergehäuses 72 mit einer durch die Öffnung 40' hindurch bis zur Seite 42 erstreckenden Gewindehülse 124 versehen, auf welche ein radial überstehender Befestigungsring 126 aufschraubbar ist, der seinerseits gegen einen die Öffnung 40' begrenzenden Ringflansch 128 wirkt, so daß die Fixierung des Isoliergehäuses 72 letztlich dadurch erfolgt, daß einerseits der Boden 108 an der der Ausnehmung 30 zugewandten Ringflanschfläche 12 des Ringflansches 128 anliegt und andererseits der Gewindering 126 an einer gegenüberliegenden Seite und somit letztlich der Boden 108 gegen den die Ausnehmung 30 stufenförmig verengenden Ringflansch 128 gezogen ist.

Bei einem fünften Ausführungsbeispiel, dargestellt in Fig. 9, sind diejenigen Teile, die mit denen der voranstehenden Ausführungsbeispiele identisch sind, mit denselben Bezugszeichen versehen, so daß hinsichtlich der Beschreibung derselben auf die Ausführungen zu den voranstehenden Ausführungsbeispielen Bezug genommen werden kann.

Beim fünften Ausführungsbeispiel gemäß Fig. 9 ist im Gegensatz zu den voranstehenden Ausführungsbeispielen die Kontakteinheit 70 in eine Ausnehmung 30' eingesetzt, deren zylindrische Wandflächen 34' koaxial zu einer Querachse 32' verlaufen, die in diesem Fall nicht senkrecht auf der Krümmungsebene 44 des Kugelhalses 12 stehen, sondern mit dieser einen Winkel von kleiner 90° einschließt. Vorzugsweise ist dabei die Querachse 32 in Richtung der Kupplungskugel 14 geneigt, so daß der Winkel von kleiner 90° zwischen der Querachse 32' und dem den Abschnitt 24 des Kugelhalses 12 durchsetzenden Bereich der Krümmungsebene 44 auftritt. Damit ist die Zugänglichkeit der Kontakteinheit 70 noch weiter verbessert, nämlich dadurch daß die Einstecköffnung 84 in Fahrtrichtung des Kraftfahrzeugs gesehen nach hinten gewandt und somit leichter zugänglich ist.

Die Befestigung des Isoliergehäuses 72 erfolgt bei diesem Ausführungsbeispiel in gleicher Weise wie beim fünften Ausführungsbeispiel, nämlich durch einen Gewindering 126 und einen vom Abschnitt 22 des Kugelhalses 12 gebildeten und die Öffnung 40' begrenzenden Ringflansch 128, gegen welchen der Boden 108 des Isoliergehäuses 72 durch den Gewindering 126 gezogen ist.

Im Gegensatz zu den voranstehenden Ausführungsbeispielen ist der Kugelhals bei diesem Ausführungsbeispiel in seinem Abschnitt 22 auf der Seite 42 mit einer bezüglich der Krümmungsebene 44 asymmetrischen Verdickung 130 versehen, welche es erlaubt, die Ausnehmung 30 mit einer ausreichenden Tiefe auszubilden, um zu verhindern, daß das Isoliergehäuse 72 mit seinem Teilbereich 82 auf der Seite 36 zu weit über den Kugelhals im Bereich des Abschnitts 22 übersteht.

Bei allen erfindungsgemäß beschriebenen Ausführungsbeispielen ist der die Ausnehmung 30 umgebende untere Schenkel 26 so dick ausgeführt, daß der Deckel 86 mit seiner Ausdehnung in Richtungen parallel zur Krümmungsebene 44 stets oberhalb der unteren Kontur 46 des Kugelhalses 12 im Abschnitt 22 liegt.

Ferner ist auch der Schenkel 28 so dick ausgeführt, daß der Deckel 86 mit seiner Ausdehnung in Richtung parallel zur Krümmungsebene 44 stets unterhalb der oberen Kontur 48 des Kugelhalses im Abschnitt 22 liegt.

Damit erfährt der Deckel stets durch den massiv ausgeführten Kugelhals 12 einen Schutz gegen eine Beschädigung in all den Fällen, in denen ein Drittgegenstand die untere Kontur oder die obere Kontur des Kugelhalses 12 berührt.

## Patentansprüche

1. Anhängekupplung für Kraftfahrzeuge, insbesondere Personenkraftfahrzeuge, umfassend einen eine Kupplungskugel (14) tragenden Kugelhals (12), eine an dem Kraftfahrzeug montierbare Halterung (10) für den Kugelhals, eine an einem zwischen der Halterung (10) und der Kupplungskugel (14) liegenden Abschnitt (22) des Kugelhalses (12) angeordnete Kontakteinheit (70), eine in dem die Kontakteinheit (70) tragenden Abschnitt (22) des Kugelhalses (12) vorgesehene Ausnehmung (30) versehen ist, welche von einer seitlich des Kugelhalses (12) liegenden ersten Öffnung (36) in den Abschnitt (22) eindringt,
**dadurch gekennzeichnet, daß** sich die Ausnehmung (30) von der ersten Öffnung (36) durch den die Kontakteinheit (70) tragenden Abschnitt (22) des Kugelhalses (12) hindurch bis zu einer zweiten Öffnung (40) erstreckt, daß die Kontakteinheit ein Isoliergehäuse (72) mit einem Deckel (86) und einen in dem Isoliergehäuse (72) angeordneten sowie elektrische Kontakte (76) tragenden Kontakteinsatz (74) aufweist, daß das Isoliergehäuse (72) sich zumindest mit einem Teilbereich (78) in die Ausnehmung (30) hineinerstreckt, und daß das Isoliergehäuse (72) mit seinem den Deckel (86) tragenden Teilbereich (82) über die Öffnung (36) der Ausnehmung (30) seitlich übersteht.

2. Anhängekupplung nach Anspruch 1, **dadurch gekennzeichnet, daß** das Isoliergehäuse (72) sich mit mindestens der Hälfte seiner axialen Länge in die Ausnehmung (30) hineinerstreckt.

3. Anhängekupplung nach einem der voranstehenden Ansprüche, **dadurch gekennzeichnet, daß** die beiden Öffnungen (36, 40) der Ausnehmung (30) auf gegenüberliegenden Seiten (38, 42) des Kugelhalses (12) angeordnet sind.

4. Anhängekupplung nach Anspruch 3, **dadurch gekennzeichnet, daß** die sich zwischen den Öffnungen (36, 40) erstreckende Ausnehmung (30) den Kugelhals (12) mit im wesentlichen konstantem Querschnitt durchdringt.

5. Anhängekupplung nach einem der Ansprüche 1 bis 4, **dadurch gekennzeichnet, daß** die eine Öffnung (36) eine größere Querschnittsfläche aufweist als die andere Öffnung (40').

6. Anhängekupplung nach Anspruch 5, **dadurch gekennzeichnet, daß** die Ausnehmung (30) sich mit dem Querschnitt der größeren Öffnung (36) in den Abschnitt (22) des Kugelhalses (12) hineinerstreckt und sich dann auf den Querschnitt der kleineren Öffnung (40') verengt.

7. Anhängekupplung nach einem der voranstehenden Ansprüche, **dadurch gekennzeichnet, daß** das Isoliergehäuse (72) über beide Öffnungen (36, 40) mit Teilbereichen (82, 94) übersteht.

8. Anhängekupplung nach einem der voranstehenden Ansprüche, **dadurch gekennzeichnet, daß** über eine der Öffnungen (40) ein elektrisches Zuleitungskabel (104) zu dem Isoliergehäuse (72) geführt ist, während im Bereich der anderen Öffnung (36) der Deckel (86) angeordnet ist.

9. Anhängekupplung nach einem der voranstehenden Ansprüche, **dadurch gekennzeichnet, daß** das Isoliergehäuse (72) in seinem sich in die Ausnehmung (30) hineinerstreckenden Teilbereich (78) eine Gehäusehülse (71) mit zylindrischer Außenkontur aufweist.

10. Anhängevorrichtung nach Anspruch 9, **dadurch gekennzeichnet, daß** ein Außendurchmesser der Gehäusehülse (71) ungefähr einem Durchmesser einer Einstecköffnung (84) entspricht.

11. Anhängekupplung nach Anspruch 9 oder 10, **dadurch gekennzeichnet, daß** die Gehäusehülse (71) in dem über die Öffnung (36) seitlich überstehenden Teilbereich (82) ein auf deren Außenseite angeordnetes Schwenklager (88) für den Deckel (86) trägt.

12. Anhängekupplung nach einem der voranstehenden Ansprüche, **dadurch gekennzeichnet, daß** das Isoliergehäuse (72) formschlüssig an dem Kugelhals (12) verankert ist.

13. Anhängekupplung nach Anspruch 12, **dadurch gekennzeichnet, daß** das Isoliergehäuse (72) in Richtung quer zu seiner Längsachse (32) durch die Ausnehmung (30) und in Richtung seiner Längsachse (32) durch an dem Kugelhals (12) anliegende Formschlußelemente (88, 96; 108, 126) formschlüssig verankert ist.

14. Anhängekupplung nach Anspruch 12 oder 13, **dadurch gekennzeichnet, daß** das Isoliergehäuse (72) in Richtung quer zu seiner Längsachse (32) durch die Ausnehmung (30) und in Richtung seiner Längsachse (32) durch Rastelemente (110, 112) formschlüssig in dem Kugelhals (12) verankert ist.

15. Anhängekupplung nach Anspruch 14, **dadurch gekennzeichnet, daß** die Rastelemente (110, 112) in eine Wand (34) der Ausnehmung (30) eingreifen.

16. Anhängekupplung nach einem der voranstehenden Ansprüche, **dadurch gekennzeichnet, daß** der Kugelhals (12) in dem die Kontakteinheit (70) tragenden Abschnitt (22) eine die Ausnehmung (30) ringförmig umschließende Form aufweist.

17. Anhängekupplung nach Anspruch 16, **dadurch gekennzeichnet, daß** eine untere Konturlinie (46) des Kugelhalses (12) im Bereich des die Kontakteinheit (70) tragenden Abschnittes (22) und diesem benachbarter Abschnitte (20, 24) kontinuierlich verläuft.

18. Anhängekupplung nach Anspruch 16 oder 17, **dadurch gekennzeichnet, daß** eine obere Konturlinie (48) des Kugelhalses (12) im Bereich des die Kontakteinheit (70) tragenden Abschnittes (22) eine konvexe Form aufweist.

19. Anhängekupplung nach Anspruch 18, **dadurch gekennzeichnet, daß** die obere Konturlinie (48) des Kugelhalses (12) unterhalb einer in Höhe einer Unterkante (58) des Kugelkopfes (14) verlaufenden Horizontalen (56) verläuft.

20. Anhängekupplung nach einem der Ansprüche 17 bis 19, **dadurch gekennzeichnet, daß** das Isoliergehäuse (72) der Kontakteinheit (70) so in der Ausnehmung angeordnet ist, daß sich der Deckel (86) in einer zur Kugelhalskrümmungsebene (44) parallelen Ebene oberhalb der unteren Konturlinie (46) des Kugelhalses (12) erstreckt.

21. Anhängekupplung nach einem der Ansprüche 17 bis 20, **dadurch gekennzeichnet, daß** sich der Deckel (86) in einer zur Kugelhalskrümmungsebene (44) parallelen Ebene unterhalb der oberen Konturlinie (48) erstreckt.

22. Anhängekupplung nach einem der voranstehenden Ansprüche, **dadurch gekennzeichnet, daß** ein zur Kontakteinheit (70) führendes Zuleitungskabel (104) längs des Kugelhalses (12) verläuft.

23. Anhängekupplung nach Anspruch 22, **dadurch gekennzeichnet, daß** das Zuleitungskabel (104) in einer sich längs des Kugelhalses (12) laufenden Vertiefung (118) verläuft.

24. Anhängekupplung nach einem der voranstehenden Ansprüche, **dadurch gekennzeichnet, daß** der Kugelhals (12) von einer aktiven Stellung in eine inaktive Stellung bringbar ist.

25. Anhängekupplung nach Anspruch 24, **dadurch gekennzeichnet, daß** der Kugelhals (12) von der aktiven Stellung in die inaktive Stellung verschwenkbar ist.

## Claims

1. Trailer coupling for motor vehicles, in particular passenger vehicles, comprising a ball neck (12) bearing a coupling ball (14), a holder (10), which can be mounted on the motor vehicle, for the ball neck, a contact unit (70), which is disposed at a portion (22) of the ball neck (12) lying between the holder (10) and the coupling ball (14), and a recess (30), which is provided in the portion (22) of the ball neck (12) bearing the contact unit (70) and which penetrates into the portion (22) from a first opening (36) lying to the side of the ball neck (12),
**characterised in that** the recess (30) extends from the first opening (36) through the portion (22) of the ball neck (12) bearing the contact unit (70) up to a second opening (40), that the contact unit comprises an insulating housing (72) with a cover (86) and a contact insert (74), which is disposed in the insulating housing (72) and bears electrical contacts (76), that the insulating housing (72) extends at least with a subregion (78) into the recess (30), and that the insulating housing (72) projects laterally with its subregion (82) bearing the cover (86) beyond the opening (36) of the recess (30).

2. Trailer coupling according to Claim 1, **characterised in that** the insulating housing (72) extends into the recess (30) with at least half of its axial length.

3. Trailer coupling according to any one of the preceding Claims, **characterised in that** the two openings (36, 40) of the recess (30) are disposed on opposite sides (38, 42) of the ball neck (12).

4. Trailer coupling according to Claim 3, **characterised in that** the recess (30) extending between the openings (36, 40) passes through the ball neck (12) with a substantially constant cross section.

5. Trailer coupling according to any one of Claims 1 to 4, **characterised in that** one opening (36) has a greater cross-sectional area than the other opening (40').

6. Trailer coupling according to Claim 5, **characterised in that** the recess (30) extends into the portion (22) of the ball neck (12) with the cross section of the larger opening (36) and then narrows to the cross section of the smaller opening (40').

7. Trailer coupling according to any one of the preceding Claims, **characterised in that** the insulating housing (72) projects beyond both openings (36, 40) with subregions (82, 94).

8. Trailer coupling according to any one of the preceding Claims, **characterised in that** an electrical supply cable (104) is routed via one of the openings (40) to the insulating housing (72), while the cover (86) is disposed in the region of the other opening (36).

9. Trailer coupling according to any one of the preceding Claims, **characterised in that** the insulating housing (72) comprises a housing sleeve (71) with a cylindrical outer contour in its subregion (78) extending into the recess (30).

10. Trailer coupling according to Claim 9, **characterised in that** an outside diameter of the housing sleeve (71) corresponds approximately to a diameter of a push-in opening (84).

11. Trailer coupling according to Claim 9 or 10,
**characterised in that**, in the subregion (82) projecting laterally beyond the opening (36), the housing sleeve (71) bears a pivot bearing (88), disposed on the outside of the subregion (82), for the cover (86).

12. Trailer coupling according to any one of the preceding Claims, **characterised in that** the insulating housing (72) is fixed positively to the ball neck (12).

13. Trailer coupling according to Claim 12, **characterised in that** the insulating housing (72) is fixed positively in the direction transverse to its longitudinal axis by means of the recess (30) and in the direction of its longitudinal axis (32) by means of positive-fitting elements (88, 96; 108, 126) lying against the ball neck (12).

14. Trailer coupling according to Claim 12 or 13,
**characterised in that** the insulating housing (72) is fixed positively in the ball beck (12) in the direction transverse to its longitudinal axis (32) by means of the recess (30) and in the direction of its longitudinal axis (32) by means of locking elements (110, 112).

15. Trailer coupling according to Claim 14, **characterised in that** the locking elements (110, 112) engage in a wall (34) of the recess (30).

16. Trailer coupling according to any one of the preceding Claims, **characterised in that** the ball neck (12) has a shape which encircles the recess (30) like a ring in the portion (22) bearing the contact unit (70).

17. Trailer coupling according to Claim 16, **characterised in that** a lower contour line (46) of the ball neck (12) extends continuously in the region of the portion (22) bearing the contact unit (70) and the portions (20, 24) adjacent to this portion.

18. Trailer coupling according to Claim 16 or 17,
**characterised in that** an upper contour line (48) of the ball neck (12) has a convex shape in the region of the portion (22) bearing the contact unit (70).

19. Trailer coupling according to Claim 18, **characterised in that** the upper contour line (48) of the ball neck (12) extends below a horizontal line (56) extending on a level with a lower edge (58) of the ball head (14).

20. Trailer coupling according to any one of Claims 17 to 19, **characterised in that** the insulating housing (72) of the contact unit (70) is disposed in the recess such that the cover (86) extends in a plane parallel to the plane of curvature (44) of the ball neck above the lower contour line (46) of the ball neck (12).

21. Trailer coupling according to any one of Claims 17 to 20, **characterised in that** the cover (86) extends in a plane parallel to the plane of curvature (44) of the ball neck below the upper contour line (48).

22. Trailer coupling according to any one of the preceding Claims, **characterised in that** a supply cable (104) leading to the contact unit (70) extends along the ball neck (12).

23. Trailer coupling according to Claim 22, **characterised in that** the supply cable (104) extends in a depression (118) running along the ball neck (12).

24. Trailer coupling according to any one of the preceding Claims, **characterised in that** the ball neck (12) can be brought from an active position into an inactive position.

25. Trailer coupling according to Claim 24, **characterised in that** the ball neck (12) can be pivoted from the active position into the inactive position.

## Revendications

1. Attelage de remorque pour véhicules automobiles, en particulier pour véhicules de tourisme, comportant un col (12) portant une tête d'attelage (14), un support (10), pouvant se monter sur le véhicule automobile, pour le col, un organe de contact (70), disposé sur un tronçon (2) du col (12) situé entre le support (10) et la tête d'attelage (14), un évidement (60) qui est prévu dans le tronçon (22) du col (12) portant l'organe de contact (70) et pénètre dans le tronçon (22) depuis une première ouverture (36) située sur le côté du col (12),
**caractérisé par le fait que** l'évidement (30) s'étend, depuis la première ouverture (36), à travers le tronçon (22) du col portant l'organe de contact (70), jusqu'à une seconde ouverture (40), que l'organe de contact présente une enveloppe isolante (72) avec un couvercle (86) et une garniture de contact (74) disposée dans l'enveloppe isolante (72) et portant des contacts électriques (76), que l'enveloppe isolante (72) s'étend au moins par une zone partielle (78) dans l'évidement (30), et que, par sa zone partielle (82) portant le couvercle (86), l'enveloppe isolante (72) s'étend latéralement au-delà de l'ouverture (36) de l'évidement (30).

2. Attelage de remorque selon la revendication 1, **caractérisé par le fait que** l'enveloppe isolante (72) s'étend dans l'évidement (30) par au moins la moitié de sa longueur axiale.

3. Attelage de remorque selon l'une des revendications précédentes, **caractérisé par le fait que** les deux ouvertures (36, 40) de l'évidement (30) sont disposées sur des côtés opposés (38, 42) du col (12).

4. Attelage de remorque selon la revendication 3, **caractérisé par le fait que** l'évidement (30) qui s'étend entre les ouvertures (36, 40) traverse le col (12) avec une section essentiellement constante.

5. Attelage de remorque selon l'une des revendications 1 à 4, **caractérisé par le fait que** l'une des ouvertures (36) présente une surface de section plus grande que l'autre ouverture (40').

6. Attelage de remorque selon la revendication 5, **caractérisé par le fait que** l'évidement (30) s'étend dans le tronçon (22) du col (12) avec la section de la plus grande ouverture (36) puis se rétrécit pour en venir à la section de la plus petite ouverture (40').

7. Attelage de remorque selon l'une des revendications précédentes, **caractérisé par le fait que** l'enveloppe isolante (72) dépasse au-delà des deux ouvertures (36, 40) par des zones partielles (82, 94).

8. Attelage de remorque selon l'une des revendications précédentes, **caractérisé par le fait que** par l'une des ouvertures (40) un câble d'amenée du courant électrique (104) est guidé vers l'enveloppe isolante (72), tandis que dans la zone de l'autre ouverture (36), est disposé le couvercle (86).

9. Attelage de remorque selon l'une des revendications précédentes, **caractérisé par le fait que** l'enveloppe isolante (72) présente, dans sa zone partielle (78) s'étendant dans l'évidement (30), un manchon (71) à contour extérieur cylindrique.

10. Dispositif de remorque selon la revendication 9, **caractérisé par le fait qu'**un diamètre extérieur du manchon (71) correspond à peu près à un diamètre d'une ouverture d'enfichage (84).

11. Attelage de remorque selon la revendication 9 ou 10, **caractérisé par le fait que** le manchon (71) porte, dans la zone partielle (82) dépassant latéralement au-delà de l'ouverture (36), un palier de pivotement (88), disposé sur sa face extérieure, pour le couvercle (86).

12. Attelage de remorque selon l'une des revendications précédentes, **caractérisé par le fait que** l'enveloppe isolante (72) est ancrée sur le col (12) par une liaison par complémentarité de forme.

13. Attelage de remorque selon la revendication 12, **caractérisé par le fait que** l'enveloppe isolante (72) est ancrée, selon la direction transversale à son axe longitudinal (32), par l'évidement (30) et selon la direction de son axe longitudinal (32), par une liaison par complémentarité de forme par des éléments de liaison par complémentarité de forme (88, 96 ; 108, 126) s'appuyant sur le col (12).

14. Attelage de remorque selon la revendication 12, **caractérisé par le fait que** l'enveloppe isolante (72) est ancrée dans le col (12) par une liaison par complémentarité de forme, selon la direction transversale à son axe longitudinal (32), par l'évidement (30) et selon la direction de son axe longitudinal (32), par des éléments d'encliquetage (110, 112).

15. Attelage de remorque selon la revendication 14, **caractérisé par le fait que** les éléments d'encliquetage (110, 112) viennent en prise dans une paroi (34) de l'évidement (30).

16. Attelage de remorque selon l'une des revendications précédentes, **caractérisé par le fait que** le col (12) présente, sur le tronçon (22) portant l'organe de contact (70), une forme entourant annulairement l'évidement (30).

17. Attelage de remorque selon la revendication 16, **caractérisé par le fait qu'**une ligne de contour inférieure (46) du col (12) a une allure continue dans la zone du tronçon (22) portant l'organe de contact (70) et des tronçons (20, 24) qui lui sont voisins.

18. Attelage de remorque selon la revendication 16 ou 17, **caractérisé par le fait qu'**une ligne de contour supérieure (48) du col (12) présente une forme convexe dans la zone du tronçon (22) portant l'organe de contact (70).

19. Attelage de remorque selon la revendication 18, **caractérisé par le fait que** la ligne de contour supérieure du col (12) s'étend en dessous d'une ligne horizontale (56) passant au niveau d'une arête inférieure (58) de la tête d'attelage (14).

20. Attelage de remorque selon l'une des revendications 17 à 19, **caractérisé par le fait que** l'enveloppe isolante (72) de l'organe de contact (70) est disposée dans l'évidement de façon que le couvercle (46) s'étende dans un plan parallèle au plan de courbure (44) du col, au-dessus de la ligne de contour inférieure (46) du col (12).

21. Attelage de remorque selon l'une des revendications 17 à 20, **caractérisé par le fait que** le couvercle (86) s'étend dans un plan parallèle au plan de courbure (44) du col, en dessous de la ligne de contour supérieure (48).

22. Attelage de remorque selon l'une des revendications précédentes, **caractérisé par le fait qu'**un câble (104) d'amenée du courant à l'organe de contact (70) court le long du col (12).

23. Attelage de remorque selon la revendication 22, **caractérisé par le fait que** le câble (104) d'amenée du courant passe dans une cavité courant le long du col (12).

24. Attelage de remorque selon l'une des revendications précédentes, **caractérisé par le fait que** le col (12) peut passer d'une position active à une position inactive.

25. Attelage de remorque selon la revendication 24, **caractérisé par le fait que** le col (12) peut pivoter pour passer de la position active à la position inactive.
